Europäisches Patentamt

European Patent Office

Office européen des brevets

(11) Publication number: **0 482 593 B1**

(12) **EUROPEAN PATENT SPECIFICATION**

(45) Date of publication of patent specification: **11.01.95**  (51) Int. Cl.⁶: **C08F 2/00**

(21) Application number: **91118010.7**

(22) Date of filing: **22.10.91**

The file contains technical information submitted after the application was filed and not included in this specification

(54) **Polymer scale preventive agent, polymerization vessel for preventing polymer scale deposition, and process of producing polymer using said vessel.**

(30) Priority: **23.10.90 JP 284559/90**

(43) Date of publication of application:
**29.04.92 Bulletin 92/18**

(45) Publication of the grant of the patent:
**11.01.95 Bulletin 95/02**

(84) Designated Contracting States:
**BE DE ES FR GB GR IT NL SE**

(56) References cited:
**EP-A- 0 000 166**
**EP-A- 0 358 364**
**FR-A- 2 318 883**
**FR-A- 2 457 169**

(73) Proprietor: **SHIN-ETSU CHEMICAL CO., LTD.**
**6-1, Ohtemachi 2-chome**
**Chiyoda-ku**
**Tokyo (JP)**

(72) Inventor: **Shimizu, Toshihide**
**E-702, 3-3, Tomioka**
**Urayasu-shi,**
**Chiba-ken (JP)**
Inventor: **Shigemitsu, Minoru**
**5-7-35, Shittechuo,**
**Kamisu-machi**
**Kashima-gun,**
**Ibaraki-ken (JP)**

(74) Representative: **von Füner, Alexander, Dr. et al**
**Patentanwälte v. Füner, Ebbinghaus, Finck**
**Mariahilfplatz 2 & 3**
**D-81541 München (DE)**

EP 0 482 593 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a polymer scale preventive composition in polymerization of a monomer having an ethylenic double bond, a polymerization vessel for preventing polymer scale deposition, and a process of producing polymer using said vessel.

In processes of preparing polymers by polymerizing a monomer in a polymerization vessel, the problem that polymer deposits on the inner wall surface and so forth in the form of scale, is known. The deposition of the polymer scale on the inner wall results in disadvantages that the yield of the polymer and cooling capacity of the polymerization vessel are lowered; that the polymer scale may peel and mix into manufactured polymer, thereby impairing the quality of the manufactured polymer; and that removal of such polymer scale is laborious and hence time-consuming. Further, since the polymer scale contains unreacted monomer and operators may be exposed thereto, which may cause physical disorders in the operators.

Heretofore, as methods for preventing polymer scale deposition on the inner wall surface and so forth of a polymerization vessel in polymerization of a monomer having an ethylenic double bond, methods in which substances exemplified below are coated on the inner wall surface, etc. as a scale preventive agent, have been known.

For example, particular polar organic compounds (Japanese Patent Publication (KOKOKU) No.45-30343(1970)), a dye or pigment (Japanese Patent Publication (KOKOKU) Nos.45-30835(1970) and 52-24953(1977)), an aromatic amine compound (Japanese Pre-examination Patent Publication (KOKAI) No.51-50887(1976)), a reaction product of a phenolic compound and an aromatic aldehyde (Japanese Pre-examination Patent Publication (KOKAI) No.55-54317(1980)) and an electron- donating compound and/or an electron-accepting compound (Japanese Patent Publication (KOKOKU) No. 53-46235(1978) are disclosed.

EP-A-358 364 describes a method of preventing polymer scale formation in a polymerization vessel during the polymerization of a monomer having an ethylenically double bond, in which prior to polymerization the inner wall surface of a polymerization vessel has been previously coated with a coating solution containing

A) at least one member selected from the group consisting of particular anionic dyes, and alkali metal salts and ammonium salts of a sulfonated product obtained by sulfonation of a condensate of a particular aromatic amine compound with a particular aromatic nitro compound, and

B) a particular cationic dye and having a pH of more than 7, and then dried to form a coating. According to this method scale formation in the polymerization of extensive monomers having an ethylenically double bond can be effectively prevented, so that 100 or more polymerization runs can be repeated without formation of polymer scale.

FR-A-2 457 169 discloses scale preventing compositions (for use in polymerization of a monomer having an ethylenically double bond) containing:

A) a watersoluble ionic polymer (for example polyvinylpyrrolidone of polymerization degree 700), and

B) a watersoluble ionic dye (for example C.I. Bleu Direct 71 or C.I. Brun Direct 1) possessing a charge, which is opposite to that of the ionic polymer.

According to the methods using these substances, one operation of forming a coating on the inner wall of a polymerization vessel enables repetition of a number of polymerization runs without formation of scale deposition in the area of the liquid phase inside the polymerization vessel.

However, since scale deposition is generally liable to occur in the vicinity of the interface between the gas phase and liquid phase, which is located at an upper section in a polymerization vessel, scale deposition may take place on this area if a coating of the conventional polymer scale preventive agent mentioned above is formed. Once scale is deposited in the vicinity of the interface between the gas and liquid phases, the deposited scale will grow as polymerization runs are repeated, causing increase in fish eyes, one of properties to be reduced from viewpoint of quality, of formed products.

That is, if polymer scale depositing on the vicinity of the interface between the gas and liquid phases has grown, it may be peeled and incorporated into a polymeric product. When the polymeric product containing the peeled scale is processed into formed products such as sheets or the like, the peeled scale causes many fish eyes in the formed products, lowering the quality thereof seriously.

An object of the present invention is to provide a polymer scale preventive composition which is capable of preventing polymer scale deposition effectively not only in the area of liquid phase but also in the vicinity of the interface between the gas and liquid phases, and producing a polymeric product of high quality and therefore reducing fish eyes in formed products to a markedly low level, a polymerization vessel capable of preventing, polymer scale deposition using the same preventive composition, and a process of producing a polymer using the polymerization vessel.

Thus, the present invention provides, as a means of attaining said object, a polymer scale preventive composition for use in polymerization of a monomer having an ethylenic double bond, comprising:

(B) an anionic organic compound having at least one group selected from the group consisting of the sulfonic acid group and the carboxyl group and having at least five continuous conjugated $\pi$ bonds, and

(C) a vinylpyrrolidone-based polymer, namely polyvinylpyrrolidone and/or a copolymer of vinylpyrrolidone with at least another comonomer,

**characterized by** comprising

A) at least one nitrogen-containing organic compound selected from the group consisting of benzidine, 4-aminobiphenyl, 2,2'-diaminodiphenylacetylene, Disperse Yellow 9 [i.e., N-(2,4-dinitrophenyl)-1,4-phenylenediamine], $\alpha$-naphthylamine, $\beta$-naphtylamine, 1,8-diaminonaphthalene, 1,5-diaminonaphthalene, 1-aminoanthracene, 1,4-diaminoanthracene, 9,10-diaminoanthracene, 1,6-diaminopyrene, 2-aminoanthraquinone, 1,4-diaminoanthraquinone, 3,6-diaminophenanthrenequinone, quinoline, 4-aminoacridine, 3,6-diaminoacridine, thionine, indophenol, methylviologen, 1,10-phenanthroline, phenothiazine, Methylene Blue, 2-aminofluorene, 9-aminofluorene, carbazole, methylcarbazole, 2,3-diaminophenazine, acriflavine, indigo, Safranine [C.I. No. 50240], Acridine Orange [C.I. No. 46005], Solvent Black 5 [C.I. No. 50415], alkaloids, azobenzene, p-hydroxyazobenzenes, p-aminoazobenzenes, 1,3-diphenyltriazene, 1-(phenylazo)-2-naphthalenol, Sudan I [i.e., C.I. Solvent Yellow 14], Sudan II [i.e., C.I. Solvent Orange 7], Sudan III [i.e., C.I. Solvent Red 23], Sudan IV [C.I. Solvent Red 24], Sudan Black B [C.I. Solvent Black 3], Oil Red O [i.e., C.I. Solvent Red 27], Disperse Orange 1 [i.e., 4-(4-nitrophenylazo) diphenylamine], Naphthyl Red [i.e., 4-phenylazo-1-naphthylamine], chrysoidine [C.I. No. 11270], Solvent Yellow 2 [C.I. No. 11020], Solvent Yellow 6 [C.I. No. 11390], Solvent Orange 1 [C.I. No. 11920], Solvent Orange 2 [C.I. No. 12100], Solvent Orange 14 [C.I. No. 20620], Solvent Red 1 [C.I. No. 12150], Solvent Red 3 [C.I. No. 12010], Solvent Brown 3 [C.I. No. 11360], and wherein the amount of the component (B) is 0.1 to 1,000 parts by weight per 100 parts by weight of the component (A), and the amount of component (C) is 0.1 to 1,000 parts by weight per 100 parts by weight of the components (A) and (B) in total.

Further the present invention provides a polymerization vessel having on its inner wall surfaces a coating comprising said components (A), (B) and (C).

Furthermore, the present invention provides a process of producing a polymer by polymerization of a monomer having an ethylenic double bond in a polymerization vessel, comprising the step of carrying out said polymerization in said polymerisation vessel having the coating on the inner wall surfaces, whereby the deposition of polymer scale is prevented.

According to the present invention, deposition of polymer scale can be effectively prevented not only in the liquid phase area but also in the vicinity of the interface between the gas and liquid phases. In addition, the coating formed on the inner wall surfaces according to the present invention is hardly peeled or dissolved into a polymerization mass during polymerization; hence products formed from the resulting polymeric product have very few fish eyes.

Further, according to the present invention, polymer scale deposition can be effectively prevented, irrespectively of polymerization conditions such as the kind of a monomer or a polymerization initiator, polymerization type, the kind of material constituting the inner wall of polymerization vessels, etc. That is, deposition of polymer scale can be effectively prevented in polymerizations in which polymer scale deposition has been difficult to prevent, e.g., in emulsion polymerization, polymerizations using a polymerization vessel made of stainless steel, or polymerizations using a polymerization initiator with a strong oxidizing action such as potassium peroxodisulfate and the like.

Therefore, if polymerization is carried out under application of the present invention, the operation of removing polymer scale is not necessarily conducted every polymerization run, thereby productivity being improved.

## Polymer scale preventive composition

### (A) Nitrogen-containing organic compound

The nitrogen-containing organic compound, component (A) of the polymer scale preventive composition of the present invention, needs to have at least five continuous conjugated $\pi$ bonds. *

The nitrogen-containing organic compounds include, * nitrogen-containing benzene derivatives such as benzidine, 4-aminobiphenyl, 2,2'-diaminodiphenylacetylene, and Disperse Yellow 9 [i.e., N-(2,4-dinitrophenyl)-1,4- phenylenediamine); nitrogen-containing naphthalene derivatives such as $\alpha$-naph-

thylamine, $\beta$-naphthylamine, 1,8- diaminonaphthalene, 1,5-diaminonaphthalene *; nitrogen-containing polynuclear aromatic compounds such as 1- aminoanthracene, 1,4-diaminoanthracene, 9,10-diaminoanthracene, 1,6-diaminopyrene *; nitrogen-containing quinones such as 2-aminoanthraquinone, 1,4-diaminoanthraquinone, 3,6-diamonophenanthrenequinone, * nitrogen-containing heterocyclic compounds such as quinoline, 4-aminoacridine, 3,6-diaminoacridine, thionine, indophenol, methylviologen, 1,10-phenanthroline, phenothiazine, Methylene Blue, 2-aminofluorene, 9-aminofluorene, carbazole, methylcarbazole, 2,3-diaminophenazine, acriflavine, indigo, Safranine (C.I. No. 50240], Acridine Orange [C.I.No. 46005), Solvent Black 5 [C.I.No. 50415); * alkaloids such as berberine; nitrogen-containing azo compounds such as azobenzene, p-hydroxyazobenzenes, p-aminoazobenzenes, 1,3-diphenyltriazene, 1-(phenylazo)-2-naphthalenol, Sudan I (i.e., C.I. Solvent Yellow 14), Sudan II [i.e., C.I. Solvent Orange 7), Sudan III (i.e., C.I. Solvent Red 23], Sudan IV (C.I. Solvent Red 24), Sudan Black B [C.I. Solvent Black 3] Oil Red 0 [i.e., C.I. Solvent Red 27), Disperse Orange 1 [i.e., 4-(4-nitrophenylazo) diphenylamine), Naphthyl Red [i.e., 4-phenylazo-1-naphthylamine), chrysoidine [C.I. No. 11270), Solvent Yellow 2 [C.I.No. 11020], Solvent Yellow 6 [C.I. No. 11390], Solvent Orange 1 [C.I.No. 11920), Solvent Orange 2 [C.I. No. 12100], Solvent Orange 14 (C.I.30 No.20620], Solvent Red 1 [C.I.No.12150), Solvent Red 3 [C.I. No.12010], Solvent Brown 3 [C.I. No. 11360] *. These may be used singly or in combination of two or more.

Among the compounds above, particularly preferred are the nitrogen-containing naphthalene derivatives, nitrogen-containing heterocyclic compounds and nitrogen-containing azo compounds.

### (B) Anionic organic compound

The anionic organic compound, component (B) of the polymer scale preventive <u>composition</u> of the present invention, has at least one group out of the sulfonic acid group and carboxyl group and has at least 5 continuous conjugated $\pi$ bonds.

Such anionic organic compounds include, for example, anionic benzene derivatives such as erythrosine [C.I. No. 45430), phloxine [C.I. No. 45410], Rose Bengal [C.I. No. 45440), Acid Red [C.I. No. 45100], Briliant Blue FCF [No. 42090), Fast Green FCF [C.I. No. 42053)*; anionic naphthalene derivatives such as sodium 1-naphthalenesulfonate, 3-hydroxy--2-naphthoic acid, 6,6'- oxybis(2-naphthalenesufonic acid), sodium 6-hydroxy-2-naphthalenesulfonate *; anionic polynuclear aromatic compounds such as 9-anthracenecarboxylic acid, 1-pyrenebutylic acid; anionic quinones such as sodium anthraquinone-$\beta$-sulfonate, sodium anthraquinone-2,6-disulfonate, Alizarine Red S [C.I. No. 58005], Alizarine Blue Black B (Mordant Black e], Alizarine Violet 3R [i.e., C.I. Acid Violet 34]*; anionic heterocyclic compounds such as Indigo Carmine [C.I. No. 13015], Acid Black 2, gallocyanine*; anionic azo compounds such as sodium 4,4'-(1-triazene-1,3-diyl)-bis-(benzenesulfonate), sodium 6-hydroxy-5-(phenylazo)-2-naphthalenesulfonate, sodium 4-((2-hydroxy-1-naphthalene)azo)benzenesulfonate, sodium 3-hydroxy-4-[(4-sufophenyl)azo)-2,7-naphthalenesulfonate, Amaranth [C.I. No. 16185), New Coccine (i.e., C.I. No. 16255], Tartrazine (C.I. No. 19140], Tropaeoline 0 [i.e C.I. Acid Orange 6], Orange I [Tropaeoline 000 No.1; C.I. No. 14600), Ponceau SS [C.I. Acid Red 150], Metanil Yellow [i.e., C.I. Acid Yellow 36], C.I. Acid Blue 161, C.I. Acid Red 88, Alizarine Yellow R, C.I. Mordant Orange 10, C.I. Mordant Yellow 10. These may be used singly or in combination of two or more.

Among the compounds above, preferred are the anionic heterocyclic compounds and anionic azo compounds.

### (C) Vinylpyrrolidone-based polymer

The vinylpyrrolidone-based polymer, component (C) of the present polymer scale preventive <u>composition,</u> includes homopolymers of vinylpyrrolidone and copolymers of vinylpyrrolidone with other comonomers. The comonomers copolymerizable with vinylpyrrolidone include, for example, acrylic acid, methacrylic acid, methyl methacrylate <u>and</u> vinyl acetate *. These may be used singly or in combination of two or more. The amount of the comonomer in the polymer ranges normally from 1 to 50% by weight, preferably 5 to 30% by weight.

The vinylpyrrolidone-based polymers can be used singly or in combination of two or more.

Among the polymers, preferred are polyvinylpyrrolidones, vinylpyrrolidone-acrylic acid copolymers and vinylpyrrolidone-vinyl acetate copolymers with a molecular weight of 2,000 to 2,000,000, preferably 10,000 to 1,000,000. If the molecular weight of the polymer is too small, the scale preventing effect is disadvantageously lowered; if the molecular weight is too large, a coating liquid described later has a high viscosity, causing disadvantages such as making the coating operation difficult.

The polymer scale preventive <u>composition</u> of the present invention is used for preventing polymer scale deposition on the inner wall surfaces, etc. of a polymerization vessel, for example, by being used for forming a coating thereon.

According to the present invention, the use of the vinylpyrrolidone-based polymer (C) in combination with the nitrogen-containing organic compound (A) and the anionic organic compound (B) provides a marked scale preventing effect. The mechanism of the action due to the vinylpyrrolidone-based polymer is not clear. Presumably the action is caused because the vinylpyrrolidone-based polymer (C) affects both of the nitrogen-containing organic compound (A) and the anionic organic compound (B), thereby increasing hydrophilic nature.

The amount of the vinylpyrrolidone-based polymer (C) in the polymer scale preventive composition of the present invention ranges normally from 0.1 to 1,000 parts by weight, preferably 1 to 600 parts by weight, more preferably 10 to 200 parts by weight, per 100 parts by weight of the total amount of the nitrogen-containing organic compound (A) and the anionic organic compound (B). If the amount of the vinylpyrrolidone-based polymer is too small or too large, improvement in scale preventing effect due to the combined use of the component (C) with the components (A) and (B) is lowered.

The amount of component (B) is normally in the range of 0.1 to 1,000 parts by weight, preferably 5 to 400 parts by weight, per 100 parts by weight of the component (A). If the amount of component (B) is outside the range above, the scale preventing effect may be lowered.

The polymer scale preventive composition is used for forming a coating on the inner wall surfaces, and preferably the surfaces of parts with which monomer comes into contact during polymerization, e.g., a stirring shaft, stirring blades, baffles, condensing coils, etc. of a polymerization vessel, so that scale deposition in the vessel can be prevented. Normally, in forming said coating on the inner wall surfaces, etc of a polymerization reactor the polymer scale preventive composition is used in a liquid state, i.e., as a coating liquid.

Preparation of a coating liquid

The coating liquid mentioned above is prepared by dissolving or dispersing said components (A), (B) and (C) in a solvent.

The solvents used for preparation of the coating solution include, for example, water; alcohols such as methanol, ethanol, propanol, butanol, 2-butanol, 2-methyl-1-propanol, 2-methyl-2-propanol, 3-methyl-1-butanol, 2-methyl-2-butanol, 2-pentanol, etc.; ketones such as acetone, methyl ethyl ketone, methyl isobutyl ketone, etc.; esters such as methyl formate, ethyl formate, methyl acetate, methyl acetoacetate, etc.; ethers such as 4-methyldioxolane, ethylene glycol diethyl ether, etc.; furans; and aprotic solvents such as dimethylformamide, dimethyl sulfoxide, acetonitrile, etc. These solvents may be used singly or as a mixed solvent of two or more thereof as appropriate. Among the solvents above, preferred are organic solvent-based solvents consisting of an organic solvent optionally 0 to 30 % by weight of, preferably 0 to 10 % by weight of water. Use of such solvents can further improve the scale preventing effect, prevent uneven application in applying the coating liquid to the inner wall surfaces, etc., and shorten the time required in the drying step after the application. Preferred organic solvents include alcohol solvents such as methanol, ethanol, propanol, butanol, 2-butanol, 2-methyl-1-propanol, 2-methyl-2-propanol, 3-methyl-1-butanol, 2-methyl-2-butanol, and 2-pentanol.

The total concentration of components (A), (B) and (C) in the coating liquid is not particularly limited as long as the total coating weight described later is obtained, and normally may range from 0.001 to 15% by weight, preferably from 0.01 to 1% by weight.

The coating liquid containing the components (A), (B) and (C) is stable at a pH of higher than 7, preferably at a pH of 7.5 or higher, so that it can be stored for a long period. Moreover, at a pH of 9.0 or higher, the scale preventing effect is also improved. Therefore, preferably, in preparation of a coating liquid, the components (A), (B) and (C) are added to a solvent, and then the pH thereof is optionally adjusted *. The alkaline compounds which may be used to adjust the pH include, e.g., alkali metal compounds such as sodium hydroxide, potassium hydroxide, and sodium carbonate, and organic amines such as ethylenediamine, ethanolamine, triethanolamine, tetramethylenediamine, ethylamine, diethylamine, and the like. Among these compounds, the organic amines are particularly preferred.

In the case where an organic solvent-based solvent is used as the solvent and an organic amine compound is used as the alkaline compound for the present scale preventive composition as described above, the scale preventing effect is further improved. The reason for this is not clear, but presumably some interaction occurring among the camponents (A), (B) and (C) enhances the scale preventing effect, and the interaction is strengthened where using an organic solvent-based solvent as compared with the case where using an aqueous medium, or where using an organic amine compound as compared with the case using an alkali metal compound.

To the coating liquid, for example, a cationic surfactant, a nonionic surfactant, an anionic surfactant, and so forth can be added as long as the scale preventing effect is not impaired.

Further, inorganic compounds can be added to the coating liquid suitably as long as the scale preventing effect is not impaired. The inorganic compounds which may be added include, for example, silicic acids or silicates such as orthosilicic acid, metasilicic acid, mesodisilicic acid, mesotrisilicic acid, mesotetrasilicic acid, sodium metasilicate, sodium orthosilicate, sodium disilicate, disilicate, sodium tetrasilicate and water glass; metallic salts such as oxygen acid salts, acetates, nitrates, hydroxides or halides of a metal selected from alkali earth metals such as magnesium, calcium, and barium, zinc family metals such as zinc, aluminum family metals such as aluminum, and platinum family metals such as platinum; and inorganic colloids such as ferric hydroxide colloid, colloid of silicic acid, colloid of barium sulfate, and colloid of aluminum hydroxide. The above-mentioned inorganic colloids may be those prepared, for example, by mechanical crushing, irradiation with ultrasonic wave, electrical dispersion or chemical methods.

Formation of coating

When the coating liquid prepared as described above is used for forming a coating on the inner wall surface of a polymerization vessel, first, the coating liquid is applied to the inner wall surface and then dried sufficiently followed by washing with water if necessary. A coating is formed by these operations on the inner wall surface of the polymerization vessel; hence the polymer scale deposition thereon can be prevented.

The above-mentioned coating is preferably formed on not only the inner wall surfaces of a polymerization vessel but also other parts with which the monomer comes into contact during polymerization. For example, it is preferred to form the coating by applying said coating liquid on a stirring shaft, stirring blades, condensers, headers, search coil, bolts, nuts, etc.

More preferably, the coating is formed on not only the parts with which the monomer comes into contact during polymerization but also other parts on which polymer scale may deposit, for example, such as the inner surfaces of equipment and tubes of recovery system for unreacted monomer. These parts, more specifically, are exemplified by the inner wall surfaces of monomer distillation columns, condensers, monomer stock tanks and valves, etc. in said recovery system.

The method of applying the coating liquid on the inner wall surface, etc. of a polymerization vessel is not particularly limited, and includes, for example, the brush coating, spray coating, the method of filing the polymerization vessel, etc. with the coating liquid followed by withdrawal thereof, and automatic coating methods as disclosed in Japanese Pre-examination Patent Publication (KOKAI) Nos.57-61001(1982) and 55-36288(1980), and Japanese Patent Publication (KOHYO) Nos.56-501116(1981) and 56- 501117(1981), and Japanese Pre-examination Publication (KOKAI) No.59-11303(1984), etc.

The method of drying wet coated surface provided by application of the coating liquid, is not limited, either. The drying is conducted preferably at a temperature within the range from room temperature to 100°C. Specifically, a method in which, after the liquid is applied, hot air with a suitable elevated temperature is blown to the coated surface, and a method in which the inner wall surface of a polymerization vessel and the surfaces of other parts to be coated are previously heated at, e.g., 30-80°C and the coating liquid is directly applied to the heated surfaces, etc. After dried, the coated surfaces are washed with water if necessary.

The coating thus formed has normally a coating weight of 0.001 g/m2 or more, preferably from 0.05 to 2 g/m$^2$.

The above coating operation may be conducted every 1 to ten-odd batches of polymerization. The formed coating has fairly good durability and retains the polymer scale-preventing action; therefore the coating operation is not necessarily performed for every batch of polymerization. Hence, the productivity of the manufactured polymer is improved.

Polymerization

After forming the coating on the inner wall surfaces of a polymerization vessel and other parts with which monomer may come into contact by application of the coating liquid, polymerization is carried out in accordance with conventional procedures therein. That is, a monomer having an ethylenic double bond and a polymerization initiator (catalyst) are charged, and then, a polymerization medium such as water, etc. and, optionally, a dispersing agent such as suspension agents, solid dispersing agents, and nonionic and anionic emulsifying agents, etc. are charged, followed by carrying out polymerization according to conventional methods.

The monomer having an ethylenic double bond to which the method of this invention can be applied includes, for example, vinyl halides such as vinyl chloride; vinyl esters such as vinyl acetate and vinyl propionate; acrylic acid, methacrylic acid, and esters and salts thereof; maleic acid, fumaric acid, and esters and anhydrides thereof; and diene monomers such as butadiene, chloroprene and isoprene; aromatic vinyl compounds such as styrene; as well as acrylonitrile, halogenated vinylidenes, and vinyl ethers.

There are no particular limitations on the type of polymerization to which the method of this invention can be applied. The present invention is effective in any types of polymerization such as suspension polymerization, emulsion polymerization, solution polymerization, bulk polymerization, and gas phase polymerization. Particularly, the present method is suitable to polymerizations in an aqueous medium such as suspension or emulsion polymerization.

Specifically, in the case of suspension polymerization and emulsion polymerization, polymerization is generally performed as follows, for instance.

First, water and a dispersing agent are charged into a polymerization vessel, and thereafter a polymerization initiator is charged. Subsequently, the inside of the polymerization vessel is evacuated to a pressure of from about 13 Pa to about 101 kPa (about 0.1 to about 760 mmHg) and a monomer is then charged (whereupon the pressure inside the polymerization vessel usually become from, 49.03 to 2941.99 kPa (0.5 to 30 kgf/cm$^2$.G). Then, the polymerization is normally carried out at a temperature of from 30 to 150°C. During the polymerization, one or more of water, a dispersing agent and a polymerization initiator may be added, if necessary. Reaction temperature during the polymerization is different depending on the kind of monomer to by polymerized. For example, in the case of polymerizing vinyl chloride, polymerization may be carried out at 30 to 80°C; in the case of polymerizing styrene, polymerization may be carried out at 50 to 150°C. The polymerization may be judged to be completed when the pressure inside the polymerization vessel falls to from about 0 Pa to 686 kPa (about 0 to 7 kgf/cm$^2$.G) or when cooling water which passes through a jacket provided around the polymerization vessel indicates almost the same temperature at the inlet where it is charged and at the outlet where it is discharged (i.e., when liberation of heat due to polymerization reaction has been completed). The water, dispersing agent and polymerization initiator charged for the polymerization are used in amounts of about 20 to 500 parts by weight, about 0.01 to 30 parts by weight, and about 0.01 to 5 parts by weight, respectively, per 100 parts by weight of the monomer.

In the case of solution polymerization, an organic solution such as toluene, xylene , pyridine and the like is used as a polymerization medium in place of water. The dispersing agent is optionally used. The other conditions are generally the same as those described for suspension and emulsion polymerization.

In the case of bulk polymerization, after the inside of a polymerization vessel is evacuated to a pressure of from * about 1 Pa to about 101 kPa (about 0.01 mmHg to about 760 mmHg) a monomer and a polymerization initiator are charged, and then polymerization is carried out at a temperature of from -10°C to 250°C. For example, in the case of polymerizing vinyl chloride, polymerization is carried out at a temperature of from 30°C to 80°C; and in the case of polymerizing styrene, polymerization may be carried out at 50°C to 150°C.

The method of the present invention is effective in preventing polymer scale from depositing, independent of materials constituting the inner wall, etc. of a polymerization vessel. For example, this method is effective in preventing polymer scale from depositing in polymerization vessels made of a stainless steel or other steels or vessels lined with glass. *

More specifically, the method of this invention can effectively prevent polymer scale from depositing, even in polymerization systems containing the following additives: for example, polymerization initiators such as t-butyl peroxyneodecanoate, bis(2-ethylhexyl) peroxydicarbonate, 3,5,5-trimethylhexanoyl peroxide, α-cumyl peroxyneodecanoate, cumene hydroperoxide, cyclohexanone peroxide, t-butyl peroxypivalate, bis-(2-ethylhexyl) peroxydicarbonate, benzoyl peroxide, lauroyl peroxide, 2,4- dichlorobenzoyl peroxide, diisopropyl peroxydicarbonate, α,α'-azobisisobutyronitrile,α,α'-azobis-2,4- dimethylvaleronitrile, potassium peroxodisulfate, ammonium peroxodisulfate, p-methane hydroperoxide; suspension agents comprised of natural or synthetic polymeric compounds such as partially saponified polyvinyl alcohols, polyacrylic acids, vinyl acetate/maleic anhydride copolymer, cellulose derivatives such as hydroxypropylmethyl cellulose, and gelatin; solid dispersing agents such as calcium phosphate and hydroxyapatite; nonionic emulsifying agents such as sorbitan monolaurate, sorbitan trioleate and polyoxyethylene alkyl ether; anionic emulsifying agents such as sodium lauryl sulfate, sodium alkylbenzenesulfonates such as sodium dodecylbenzenesulfonate and sodium dioctylsulfosuccinate; fillers such as calcium carbonate and titanium oxide; stabilizers such as tribasic lead sulfate, calcium stearate, dibutyltin dilaurate and dioctyltin mercaptide; lubricants such as rice wax, stearic acid and cetyl alcohol; plasticizers such as DOP and DBP; chain transfer agents such as trichloroethylene and mercaptans as exemplified by t- dodecyl mercaptans; and pH adjusters.

Addition to polymerization system

The polymer scale preventive <u>composition</u> of the present invention may be added into a polymerization medium in addition to the formation of the coating, so that the scale preventing effect is further improved. The amount of the polymer scale preventive <u>composition</u> to be added into the polymerization medium, preferably ranges from about 10 ppm to 1,000 ppm based on the whole weight of the monomer charged. The addition should be conducted so that it may not affect the quality of polymeric product to be obtained with respect to fish eyes, bulk density, particle size distribution, etc.

EXAMPLES

The present invention is now described in detail by way of working examples and comparative examples. In each of the tables below, Experiments of Nos. marked with * are comparative examples, and the other Experiments working examples of the present invention.

Example 1

Polymerization was carried out in the following manner using a polymerization vessel with an inner capacity of 1,000 liters and having a stirrer.

In each experiment, first, a component (A) (nitrogen-containing organic compound), a component (B) (anionic organic compound) and a component (C) (polyvinylpyrrolidone, produced by Aldrich Chemical Co Ltd.) were dissolved in a solvent so that the total concentration thereof might become the value given in Table 1, to prepare a coating liquid. The coating liquid was applied by spraying to the inner wall and other parts with which a monomer comes into contact including the stirring shaft, stirring blades and baffles, followed by drying under heating at 40°C for 15 min. to form a coating, which was then washed with water.

Experiments of Nos. 101 - 107 are comparative examples in which no coating liquid was applied or a coating liquid containing only one or two of components (A), (B) and (C) was applied.

The nitrogen-containing organic compound (A), the anionic organic compound (B), the average molecular weight of the vinylpyrrolidone-based polymer (C), the total concentration of the components (A), (B) and (C), the weight ratio of (A)/(B)/(C), and the solvent used in each experiment are given in Table 1.

Subsequently, in the polymerization vessel in which a coating had been formed by the coating operation as above, were charged 400 kg of water, 200 kg of vinyl chloride, 250 g of a partially saponified polyvinyl alcohol, 25 g of hydroxypropylmethyl cellulose and 70 g of 3,5,5- trimethylhexanoyl peroxide. Then, polymerization was carried out at 66°C with stirring for 6 hours. After the completion of the polymerization, polymeric product and unreacted monomer were taken out of the vessel and then the inside of the vessel was washed with water and residual resin was removed.

Thereafter, the batch of operations from applying a coating liquid through carrying out polymerization to cleaning the vessel with water was repeated. After repetition of 10 batches of polymerization run, the amount of polymer scale depositing on the inner wall was measured at an area in the liquid phase and in the vicinity of the interface between the gas and liquid phases, in accordance with the method below. The results are given in Table 2, provided that for Experiments of Nos. 101 to 107, the results after the second batch were given. In Experiments of Nos. 108 to 114, polymerization runs were repeated for another 10 batches, and the amount of scale after 20 batches in total was also measured.

The polymeric products obtained after 10th batch and 20th batch in each experiment were formed into sheet, and fish eyes on the sheet were measured in accordance with the method below. The results are given in Table 2.

- Measurement of the amount of polymer scale

The scale depositing on the inner wall surface in the area of 10 cm$^2$ were scraped off with a stainless steel spatula as completely as possible to be confirmed with naked eyes, and then the scraped scale was weighted on a balance. Thereafter, the amount of the deposited scale per area of 1 m$^2$ was obtained by multiplying the measured value by 100.

- Measurement of fish eyes

A hundred parts by weight of a polymer, 50 parts by weight of DOP, 1 part by weight of dibutyltin dilaurate, 1 part by weight of cetyl alcohol, 0.25 part by weight of titanium oxide and 0.05 part by weight of carbon black were formulated to prepare a mixture. The mixture was kneaded at 150°C for 7 min. with a twin roll mill, and then formed into a sheet 0.2 mm thick. The sheet was examined for

Table 1

| Exp.No | Coating liquid | | | | | | |
|---|---|---|---|---|---|---|---|
| | (A)Nitrogen-containing organic compound | (B)Anionic organic compound | (C)Average molecular weight of polyvinyl pyrrolidone | Total concentration of(A)+(B) (wt.%) | Weight ratio (A)/(B)/(C) | Solvent | |
| | | | | | | Composition (Wt.ratio) | pH (Additive) |
| 101* | —— | —— | —— | —— | —— | —— | —— |
| 102* | Sudan Black B | —— | —— | 0.2 | 100/ 0/ 0 | Methanol | 6.8 |
| 103* | —— | C.I.Acid Black 2 | —— | 0.2 | 0/100/ 0 | Methanol | 7.7 |
| 104* | —— | —— | 40,000 | 0.2 | 0/ 0/100 | Methanol | 7.5 |
| 105* | Sudan Black B | —— | 40,000 | 0.2 | 80/ 0/ 20 | Methanol | 7.2 |
| 106* | —— | C.I.Acid Black 2 | 40,000 | 0.2 | 0/ 50/ 50 | Methanol | 7.8 |
| 107* | Sudan Black B | C.I.Acid Black 2 | —— | 0.2 | 50/ 50/ 0 | Methanol | 7.4 |
| 108 | Sudan Black B | C.I.Acid Black 2 | 40,000 | 0.2 | 40/ 40/ 20 | Methanol | 7.5 |
| 109 | Sudan Black B | C.I.Acid Black 2 | 40,000 | 0.2 | 60/ 30/ 10 | Methanol | 10.5 (Ethylene-diamine) |
| 110 | 1,8-Diamino-naphthalene | C.I.Acid Blue 161 | 10,000 | 0.1 | 35/ 35/ 30 | Aceton/Water (50/50) | 11.0 (Ethanol-amine) |
| 111 | 3,6-Diamino-acridine | Orange 1 | 360,000 | 0.05 | 20/ 20/ 60 | Methanol/Water (50/50) | 10.0 (Ethanol-amine) |
| 112 | p-Hydroxy-azobenzene | Tartrazine | 40,000 | 0.05 | 40/ 40/ 20 | Methanol/Water (30/70) | 10.0 (Ethanol-amine) |
| 113 | Sudan Ⅲ (C.I.Solvent red 23) | Amaranth | 40,000 | 0.05 | 40/ 50/ 10 | Methanol/Water (90/10) | 12.0 (Trietha-nolamine) |
| 114 | C.I.Solvent Brown 3 | Alizarine Red S | 40,000 | 0.05 | 50/ 40/ 10 | Methanol/Water (50/50) | 12.0 (Ethylene-diamine) |

number of fish eyes per 100 cm² by light transmission.

Table 2

| Exp.No | After 10 polymerization runs[1] | | | After 20 polymerization runs[2] | | |
| | Amount of scale (g/m²) | | No. of fish eyes | Amount of scale (g/m²) | | No. of fish eyes |
| | Liquid phase area | Area in vicinity of liquid - gas interface | | Liquid phase area | Area in vicinity of liquid - gas interface | |
|---|---|---|---|---|---|---|
| 101* | 2100 | 4,500 | 53 | — | — | — |
| 102* | 10 | 200 | 25 | — | — | — |
| 103* | 2000 | 4,200 | 50 | — | — | — |
| 104* | 2000 | 4,200 | 49 | — | — | — |
| 105* | 5 | 100 | 29 | — | — | — |
| 106* | 1800 | 4,100 | 47 | — | — | — |
| 107* | 0 | 90 | 18 | — | — | — |
| 108 | 0 | 25 | 13 | 0 | 39 | 15 |
| 109 | 0 | 0 | 1 | 0 | 1 | 2 |
| 110 | 0 | 30 | 9 | 0 | 50 | 15 |
| 111 | 0 | 48 | 16 | 0 | 60 | 22 |
| 112 | 0 | 38 | 17 | 0 | 95 | 25 |
| 113 | 0 | 0 | 1 | 0 | 1 | 2 |
| 114 | 0 | 20 | 12 | 0 | 35 | 17 |

Remarks: The data shown for Exp. Nos. 101–107 were measured after two polymerization runs.

## Example 2

In each experiment, the coating procedure of Example 1 was repeated for a stainless steel polymerization vessel having an inner capacity of 20 liters and equipped with a stirrer, except that a coating liquid in which the nitrogen-containing organic compound (A), the anionic organic compound (B), the average molecular weight of the polyvinylpyrrolidone (C) (product by Aldrich Chemical Co Ltd.), the total concentration of the components (A) + (B) + (C), the weight ratio of (A)/(B)/(C), and the solvent are as given in Table 3, was used. Experiments of Nos. 201 to 207 are comparative experiments in which no coating liquid was applied or a coating liquid containing only one or two of the component (A), (B) and (C) was applied.

In the polymerization vessel in which the coating was thus formed, were charged 9 kg of water, 225 g of sodium dodecylbenzenesulfonate, 12 g of t-dodecyl mercaptan, and 13 g of potassium peroxodisulfate. After the inner atmosphere was replaced with a nitrogen gas, 1.3 kg of styrene and 3.8 kg of butadiene were charged, followed by polymerization at 50°C for 20 hours.

After completion of the polymerization, the amount of polymer scale depositing on the inner wall surface was measured at an area which had been located in the liquid phase during polymerization and in the vicinity of the interface between the gas and liquid phases.

In Experiments of Nos. 208 to 212, the batch of operations of applying a coating liquid and polymerization above was repeated 10 times. After the 10 batches, the amount of polymer scale depositing on the inner wall surface was measured at an area which had been located in the liquid phase and in the vicinity of the interface between the gas and liquid phases.

Table 3

| Exp.No | (A)Nitroge-containing organic compound | (B)Anionic organic compound | (C)Average molecular weight of polyvinyl pyrrolidone | Total concentration of(A)+(B) (wt.%) | Weight ratio (A)/(B)/(C) | Solvent Composition (Wt.ratio) | pH (Additive) |
|---|---|---|---|---|---|---|---|
| 201* | —— | —— | —— | —— | —— | —— | —— |
| 202* | C.I.Solvent Brown 3 | —— | —— | 0.3 | 100/ 0/ 0 | Methanol | 6.7 |
| 203* | —— | C.I.Acid Black 2 | —— | 0.3 | 0/100/ 0 | Methanol | 7.7 |
| 204* | —— | —— | 40,000 | 0.3 | 0/ 0/100 | Methanol | 7.5 |
| 205* | C.I.Solvent-Brown 3 | —— | 40,000 | 0.3 | 80/ 0/ 20 | Methanol | 7.2 |
| 206* | —— | C.I.Acid Black 2 | 40,000 | 0.3 | 0/ 50/ 50 | Methanol | 7.8 |
| 207* | C.I.Solvent-Brown 3 | C.I.Acid Black 2 | —— | 0.3 | 50/ 50/ 0 | Methanol | 7.4 |
| 208 | C.I.Solvent-Brown 3 | C.I.Acid Black 2 | 40,000 | 0.3 | 40/ 40/ 20 | Methanol | 7.5 |
| 209 | C.I.Solvent-Brown 3 | C.I.Acid Black 2 | 40,000 | 0.3 | 40/ 40/ 20 | Methanol | 10.5 (Ethylene-diamine) |
| 210 | 1,8-Diamino-naphthalene | Tropaeoline 0 | 360,000 | 0.1 | 25/ 25/ 50 | Methanol/Water (70/30) | 11.0 (Ethanol-amine) |
| 211 | p-Hydroxy-azobenzene | C.I.Acid Red 150 | 360,000 | 0.1 | 50/ 40/ 10 | Methanol/Water (50/50) | 11.0 (Trietha-nolamine) |
| 212 | C.I.Solvent Red 3 | Alizarine Blue Black 8 | 360,000 | 0.05 | 40/ 50/ 10 | Methanol | 10.5 (Ethanol-amine) |

12

Table 4

| Exp.No | After one polymerization run — Amount of scale (g/m²) | | After 10 polymerization runs — Amount of scale (g/m²) | |
|---|---|---|---|---|
| | Liquid phase area | Area in vicinity of liquid – gas interface | Liquid phase area | Area in vicinity of liquid – gas interface |
| 201* | 300 | 650 | — | — |
| 202* | 240 | 640 | — | — |
| 203* | 280 | 650 | — | — |
| 204* | 280 | 650 | — | — |
| 205* | 230 | 520 | — | — |
| 206* | 270 | 630 | — | — |
| 207* | 150 | 180 | — | — |
| 208 | 0 | 3 | 15 | 23 |
| 209 | 0 | 1 | 0 | 1 |
| 210 | 0 | 2 | 10 | 5 |
| 211 | 0 | 0 | 30 | 16 |
| 212 | 0 | 1 | 0 | 1 |

## Claims

1. A polymer scale preventive composition for use in polymerization of a monomer having an ethylenic double bond, comprising:

   B) an anionic organic compound having at least one group selected from the group consisting of the sulfonic acid group and the carboxylic group and having at least five continuous conjugated $\pi$ bonds, and

   C) a vinylpyrrolidone-based polymer, namely, polyvinylpyrrolidone and/or a copolymer of vinylpyrrolidone with at least another comonomer,

   **characterized by** comprising further

   A) at least one nitrogen-containing organic compound selected from the group consisting of benzidine, 4-aminobiphenyl, 2,2'-diaminodiphenylacetylene, Disperse Yellow 9 [i.e., N-(2,4-dinitrophenyl)-1,4-phenylenediamine], $\alpha$-naphthylamine, $\beta$-naphtylamine, 1,8-diaminonaphthalene, 1,5-diaminonaphthalene, 1-aminoanthracene, 1,4-diaminoanthracene, 9,10-diaminoanthracene, 1,6-diaminopyrene, 2-aminoanthraquinone, 1,4-diaminoanthraquinone, 3,6-diaminophenanthrenequinone, quinoline, 4-aminoacridine, 3,6-diaminoacridine, thionine, indophenol, methylviologen, 1,10-phenanthroline, phenothiazine, Methylene Blue, 2-aminofluorene, 9-aminofluorene, carbazole, methylcarbazole, 2,3-diaminophenazine, acriflavine, indigo, Safranine [C.I. No. 50240], Acridine Orange [C.I. No. 46005], Solvent Black 5 [C.I. No. 50415], alkaloids, azobenzene, p-hydroxyazobenzenes, p-aminoazobenzenes, 1,3-diphenyltriazene, 1-(phenylazo)-2-naphthalenol, Sudan I [i.e., C.I. Solvent Yellow 14], Sudan II [i.e., C.I. Solvent Orange 7], Sudan III [i.e., C.I. Solvent Red 23), Sudan IV [C.I. Solvent Red 24], Sudan Black B [C.I. Solvent Black 3], Oil Red O [i.e., C.I. Solvent Red 27], Disperse Orange 1 [i.e., 4-(4-nitrophenylazo) diphenylamine], Naphthyl Red [i.e., 4-phenylazo-1-naphthylamine], chrysoidine [C.I. No. 11270], Solvent Yellow 2 [C.I. No. 11020], Solvent Yellow 6 [C.I. No. 11390], Solvent Orange 1 [C.I. No. 11920], Solvent Orange 2 [C.I. No. 12100], Solvent Orange 14 [C.I. No. 20620], Solvent Red 1 [C.I. No. 12150], Solvent Red 3 [C.I. No. 12010], Solvent Brown 3 [C.I. No. 11360], and
wherein the amount of the component (B) is 0.1 to 1,000 parts by weight per 100 parts by weight of the component (A), and the amount of component (C) is 0.1 to 1,000 parts by weight per 100 parts by weight of the components (A) and (B) in total.

2. The polymer scale preventive composition according to claim 1, wherein said component (A) comprises at least one member selected from the group consisting of $\alpha$-naphthylamine, $\beta$-naphtylamine, 1,8-diaminonaphthalene, 1,5-diaminonaphthalene, quinoline, 4-aminoacridine, 3,6-diaminoacridine, thionine, indophenol, methylviologen, 1,10-phenanthroline, phenothiazine, Methylene Blue, 2-aminofluorene, 9-aminofluorene, carbazole, methylcarbazole, 2,3-diaminophenazine, acriflavine, indigo, Safranine [C.I. No. 50240], Acridine Orange [C.I. No. 46005], Solvent Black 5 [C.I. No. 50415], azobenzene, p-hydroxyazobenzenes, p-aminoazobenzenes, 1,3-diphenyltriazene, 1-(phenylazo)-2-naphthalenol, Sudan I [i.e., C.I. Solvent Yellow 14], Sudan II [i.e., C.I. Solvent Orange 7], Sudan III [i.e., C.I. Solvent Red 23], Sudan IV [C.I. Solvent Red 24], Sudan Black B [C.I. Solvent Black 3], Oil Red O [i.e., C.I. Solvent Red 27], Disperse Orange 1 [i.e., 4-(4-nitrophenylazo) diphenylamine], Naphthyl Red [i.e., 4-phenylazo-1-naphthylamine], chrysoidine [C.I. No. 11270], Solvent Yellow 2 [C.I. No. 11020], Solvent Yellow 6 [C.I. No. 11390], Solvent Orange 1 [C.I. No. 11920], Solvent Orange 2 [C.I. No. 12100], Solvent Orange 14 [C.I. No. 20620], Solvent Red 1 [C.I. No. 12150], Solvent Red 3 [C.I. No. 12010], Solvent Brown 3 [C.I. No. 11360].

3. The polymer scale preventive composition according to claim 1 or 2, wherein said component (B) comprises at least one member selected from the group consisting of anionic heterocyclic compounds and anionic azo compounds.

4. The polymer scale preventive composition according to any one of claims 1 to 3, wherein said component (C) comprises at least one member selected from the group consisting of polyvinyl-pyrrolidones, vinylpyrrolidone-acrylic acid copolymers and vinylpyrrolidone-vinyl acetate copolymers with a molecular weight of 2,000 to 2,000,000.

5. The polymer scale preventive composition according to any of claims 1 to 4, which further comprises a solvent in which the components (A), (B) and (C) is dissolved or dispersed to form a liquid state.

6. The polymer scale preventive composition according to claim 5, wherein the total concentration of the component (A), (B) and (C) is in the range of from 0.001 to 15 % by weight.

7. The polymer scale preventive composition according to claim 5 or 6, wherein the solvent consists of an organic solvent and optionally 0 to 30 % by weight of water.

8. The polymer scale preventive composition according to any of claims 5 to 7, wherein the water is contained in an amount of 0 to 10 % by weight.

9. The polymer scale preventive composition according to any one of claims 5 to 8, wherein the pH of the polymer scale composition is higher than 7.

10. The polymer scale preventive composition according to claim 9, wherein the pH is 7.5 or higher.

11. The polymer scale preventive composition according to claim 10, wherein the pH is 9.0 or higher.

12. The polymer scale preventive composition according to any one of claims 9 to 11, wherein an organic amine compound is contained.

13. A polymerization vessel for use in polymerization of a monomer having an ethylenic double bond, having on its inner wall surfaces a coating for preventing polymer scale deposition, said coating comprising:

B) an anionic organic compound having at least one group selected from the group consisting of the sulfonic acid group and the carboxylic group and having at least five continuous conjugated $\pi$ bonds, and

C) a vinylpyrrolidone-based polymer, namely, polyvinylpyrrolidone and/or a copolymer of vinylpyrrolidone with at least another comonomer,

**characterized by** comprising further

A) at least one nitrogen-containing organic compound selected from the group consisting of benzidine, 4-aminobiphenyl, 2,2'-diaminodiphenylacetylene, Disperse Yellow 9 [i.e., N-(2,4-dinitrophenyl)-1,4-phenylenediamine], $\alpha$-naphthylamine, $\beta$-naphtylamine, 1,8-diaminonaphthalene, 1,5-diaminonaphthalene, 1-aminoanthracene, 1,4-diaminoanthracene, 9,10-diaminoanthracene, 1,6-diaminopyrene, 2-aminoanthraquinone, 1,4-diaminoanthraquinone, 3,6-diaminophenanthrenequinone, quinoline, 4-aminoacridine, 3,6-diaminoacridine, thionine, indophenol, methylviologen, 1,10-phenanthroline, phenothiazine, Methylene Blue, 2-aminofluorene, 9-aminofluorene, carbazole, methylcarbazole, 2,3-diaminophenazine, acriflavine, indigo, Safranine [C.I. No. 50240], Acridine Orange [C.I. No. 46005], Solvent Black 5 [C.I. No. 50415], alkaloids, azobenzene, p-hydroxyazobenzenes, p-aminoazobenzenes, 1,3-diphenyltriazene, 1-(phenylazo)-2-naphthalenol, Sudan I [i.e., C.I. Solvent Yellow 14], Sudan II [i.e., C.I. Solvent Orange 7], Sudan III [i.e., C.I. Solvent Red 23], Sudan IV [C.I. Solvent Red 24], Sudan Black B [C.I. Solvent Black 3], Oil Red O [i.e., C.I. Solvent Red 27], Disperse Orange 1 [i.e., 4-(4-nitrophenylazo) diphenylamine], Naphthyl Red [i.e., 4-phenylazo-1-naphthylamine], chrysoidine [C.I. No. 11270], Solvent Yellow 2 [C.I. No. 11020], Solvent Yellow 6 [C.I. No. 11390], Solvent Orange 1 [C.I. No. 11920], Solvent Orange 2 [C.I. No. 12100], Solvent Orange 14 [C.I. No. 20620], Solvent Red 1 [C.I. No. 12150], Solvent Red 3 [C.I. No. 12010], Solvent Brown 3 [C.I. No. 11360], and

wherein the amount of the component (B) is 0.1 to 1,000 parts by weight per 100 parts by weight of the component (A), and the amount of component (C) is 0.1 to 1,000 parts by weight per 100 parts by weight of the components (A) and (B) in total.

14. The polymerization vessel according to claim 13, wherein said coating has been formed further on the parts with which the monomer comes into contact during polymerization other than the inner wall surface of the polymerization vessel.

15. The polymerization vessel according to claim 13 or 14, wherein said coating has been formed further on parts of the recovery system for unreacted monomer with which unreacted monomer comes into contact.

16. The polymerization vessel according to any one of claims 13 to 15, wherein, after dried, said coating has a coating weight of 0.001 $g/m^2$ or more.

17. A process of producing a polymer by polymerization of a monomer having an ethylenic double bond in a polymerization vessel, comprising the step of carrying out said polymerization in a polymerization vessel having on its inner wall surfaces a coating preventing polymer scale deposition, wherein the coating comprises:

B) an anionic organic compound having at least one group selected from the group consisting of the sulfonic acid group and the carboxylic group and having at least five continuous conjugated $\pi$ bonds, and

C) a vinylpyrrolidone-based polymer, namelypolyvinylpyrrolidone and/or a copolymer of vinylpyrrolidone with at least another comonomer,

**characterized by** comprising further

A) at least one nitrogen-containing organic compound selected from the group consisting of benzidine, 4-aminobiphenyl, 2,2'-diaminodiphenylacetylene, Disperse Yellow 9 [i.e., N-(2,4-dinitrophenyl)-1,4-phenylenediamine], α-naphthylamine, β-naphtylamine, 1,8-diaminonaphthalene, 1,5-diaminonaphthalene, 1-aminoanthracene, 1,4-diaminoanthracene, 9,10-diaminoanthracene, 1,6-diaminopyrene, 2-aminoanthraquinone, 1,4-diaminoanthraquinone, 3,6-diaminophenanthrenequinone, quinoline, 4-aminoacridine, 3,6-diaminoacridine, thionine, indophenol, methylviologen, 1,10-phenanthroline, phenothiazine, Methylene Blue, 2-aminofluorene, 9-aminofluorene, carbazole, methylcarbazole, 2,3-diaminophenazine, acriflavine, indigo, Safranine [C.I. No. 50240], Acridine Orange [C.I. No. 46005], Solvent Black 5 [C.I. No. 50415], alkaloids, azobenzene, p-hydroxyazobenzenes, p-aminoazobenzenes, 1,3-diphenyltriazene, 1-(phenylazo)-2-naphthalenol, Sudan I [i.e., C.I. Solvent Yellow 14], Sudan II [i.e., C.I. Solvent Orange 7], Sudan III [i.e., C.I. Solvent Red 23], Sudan IV [C.I. Solvent Red 24], Sudan Black B [C.I. Solvent Black 3], Oil Red O [i.e., C.I. Solvent Red 27], Disperse Orange 1 [i.e., 4-(4-nitrophenylazo) diphenylamine], Naphthyl Red [i.e., 4-phenylazo-1-naphthylamine], chrysoidine [C.I. No. 11270], Solvent Yellow 2 [C.I. No. 11020], Solvent Yellow 6 [C.I. No. 11390], Solvent Orange 1 [C.I. No. 11920], Solvent Orange 2 [C.I. No. 12100], Solvent Orange 14 [C.I. No. 20620], Solvent Red 1 [C.I. No. 12150], Solvent Red 3 [C.I. No. 12010], Solvent Brown 3 [C.I. No. 11360], and

wherein the amount of the component (B) is 0.1 to 1,000 parts by weight per 100 parts by weight of the component (A), and the amount of component (C) is 0.1 to 1,000 parts by weight per 100 parts by weight of the components (A) and (B) in total.

18. The process according to claim 17, wherein said polymerization is carried out as suspension polymerization, emulsion polymerization, solution polymerization, bulk polymerization, or gas phase polymerization.

19. The process according to claim 17 or 18, wherein said monomer is selected from the group consisting of vinyl halides; vinyl esters; acrylic acid, methacrylic acid, and esters and salts thereof; maleic acid and fumaric acid, and esters and anhydrids thereof; diene monomers; aromatic vinyl compounds; acrylonitrile; halogenated vinylidenes; and vinyl ethers.

**Patentansprüche**

1. Zusammensetzung zur Verhinderung der Polymerkrustenbildung im Verlaufe der Polymerisation eines Monomers mit einer ethylenischen Doppelbindung, die
   B) eine anionische organische Verbindung, die mindestens eine Gruppe, ausgewählt aus der Gruppe, bestehend aus einer Sulfonsäure- und einer Carbonsäuregruppe, enthält und mindestens fünf aufeinanderfolgend konjugierte π-Bindungen aufweist, und
   C) ein Polymer auf Vinylpyrrolidonbasis, und zwar Polyvinylpyrrolidon und/oder ein Copolymer von Vinylpyrrolidon mit mindestens einem anderen Comonomer enthält, dadurch **gekennzeichnet**, daß sie außerdem
   A) mindestens eine stickstoffhaltige organische Verbindung, ausgewählt aus der Gruppe, bestehend aus Benzidin, 4-Aminobiphenyl, 2,2'-Diaminodiphenylacetylen, Dispersionsfarbstoff Gelb 9 [d.h. N-(2,4-Dinitrophenyl)-1,4-phenylendiamin], α-Naphthylamin, β-Naphthylamin, 1,8-Diaminonaphthalin, 1,5-Diaminonaphthalin, 1-Aminoanthracen, 1,4-Diaminoanthracen, 9,10-Diaminoanthracen, 1,6-Diaminopyren, 2-Aminoanthrachinon, 1,4-Diaminoanthrachinon, 3,6-Diaminophenanthrenchinon, Chinolin, 4-Aminoacridin, 3,6-Diaminoacridin, Thionin, Indophenol, Methylviologen, 1,10-Phenanthrolin, Phenothiazin, Methylenblau, 2-Aminofluoren, 9-Aminofluoren, Carbazol, Methylcarbazol, 2,3-Diaminophenazin, Acriflavin, Indigo, Safranin (C.I. Nr. 50240), Acridin-Orange (C.I. Nr. 46005), Lösungsmittelfarbstoff Schwarz 5 (C.I. Nr. 50415), Alkaloide, Azobenzol, p-Hydroxyazobenzole, p-Aminoazobenzole, 1,3-Diphenyltriazen, 1-(Phenylazo)-2-naphthalenol. Sudan 1 (d.h. Lösungsmittelfarbstoff Gelb C.I. 14), Sudan II (d.h. Lösungsmittelfarbstoff Orange C.I. 7), Sudan III (d.h. Lösungsmittelfarbstoff Rot C.I. 23), Sudan IV (Lösungsmittelfarbstoff Rot C.I. 24), Sudan Schwarz B ( Lösungsmittelfarbstoff Schwarz C.I. 3), Sudan O (d.h. Lösungsmittelfarbstoff Rot C.I. 27), Dispersionsfarbstoff Orange 1 (d.h. 4-(4-Nitrophenylazo)diphenylamin), Naphthyl-Rot (d.h. 4-Phenylazo-1-naphthylamin), Chrysoidin (C.I. Nr. 11270), Lösungsmittelfarbstoff Gelb 2 (C.I. Nr. 11020), Lösungsmittelfarbstoff Gelb 6 (C.I. Nr. 11390), Lösungsmittelfarbstoff Orange 1 (C.I. Nr. 11920), Lösungsmittelfarbstoff Orange 2 (C.I. Nr. 12100), Lösungsmittelfarbstoff Orange 14 (C.I. Nr. 20620), Lösungsmittelfarbstoff Rot 1 (C.I. Nr. 12150), Lösungsmittelfarbstoff Rot 3 (C.I. Nr. 12010) und Lösungsmittelfarbstoff Braun 3 (C.I. Nr. 11360), enthält und
   worin die Menge der Komponente (B) 0,1 bis 100 Gew.Teile je 100 Gew.Teile der Komponente (A) und die Menge der Komponente (C) 0,1 bis 1000 Gew.Teile je 100 Gew.Teile der Komponenten (A) und (B) zusammengenommen beträgt.

2. Zusammensetzung zur Verhinderung der Polymerkrustenbildung gemäß Anspruch 1, worin die Komponente (A) mindestens eine Verbindung, ausgewählt aus der Gruppe, bestehend aus $\alpha$-Naphthylamin, $\beta$-Naphthylamin, 1,8-Diaminonaphthalin, 1,5-Diaminonaphthalin, Chinolin, 4-Aminoacridin, 3,6-Diaminoacridin, Thionin, Indophenol, Methylviologen, 1,10-Phenanthrolin, Phenothiazin, Methylenblau, 2-Aminofluoren, 9-Aminofluoren, Carbazol, Methylcarbazol, 2,3-Diaminophenazin, Acriflavin, Indigo, Safranin (C.I. Nr. 50240), Acridin-Orange (C.I. Nr. 46005), Lösungsmittelfarbstoff Schwarz 5 (C.I. Nr. 50415), Azobenzol, p-Hydroxyazobenzole, p-Aminoazobenzole, 1,3-Diphenyltriazen, 1-(Phenylazo)-2-naphthalenol, Sudan I (d.h. Lösungsmittelfarbstotf Gelb C.I. 14), Sudan II (d.h. Lösungsmittelfarbstoff Orange C.I. 7), Sudan III (d.h. Lösungsmittelfarbstoff Rot C.I. 23), Sudan IV (Lösungsmittelfarbstoff Rot C.I. 24), Sudanschwarz B (Lösungsmittelfarbstoff Schwarz C.I. 3), Sudan O (d.h. Lösungsmittelfarbstoff Rot C.I. 27), Dispersionsfarbstoff Orange 1 (d.h. 4-(4-Nitrophenylazo)diphenylamin), Naphthyl-Rot (d.h. 4-Phenylazo-1-naphthylamin), Chrysoidin (C.I. Nr. 11270), Lösungsmittelfarbstoff Gelb 2 (C.I. Nr. 11020), Lösungsmittelfarbstoff Gelb 6 (C.I. Nr. 11390), Lösungsmittelfarbstoff Orange 1 (C.I. Nr. 11920), Lösungsmittelfarbstoff Orange 2 (C.I. Nr. 12100), Lösungsmittelfarbstoff Orange 14 (C.I. Nr. 20620), Lösungsmittelfarbstoff Rot 1 (C.I. Nr. 12150), Lösungsmittelfarbstoff Rot 3 (C.I. Nr. 12010) und Lösungsmittelfarbstoff Braun 3 (C.I. Nr. 11360), enthält.

3. Zusammensetzung zur Verhinderung der Polymerkrustenbildung nach Anspruch 1 oder 2, worin die Komponente (B) mindestens eine Verbindung, ausgewählt aus der Gruppe, bestehend aus anionischen heterocyclischen Verbindungen und anionischen Azoverbindungen, enthält.

4. Zusammensetzung zur Verhinderung der Polymerkrustenbildung nach einem der Ansprüche 1 bis 3, worin die Komponente (C) mindestens eine Verbindung, ausgewählt aus der Gruppe, bestehend aus Polyvinylpyrrolidonen, Vinylpyrrolidon/Acrylsäure-Copolymeren und Vinylpyrrolidon/Vinylacetat-Copolymeren mit einem Molekulargewicht von 2.000 bis 2,000.000, enthält.

5. Zusammensetzung zur Verhinderung der Polymerkrustenbildung nach einem der Ansprüche 1 bis 4, die zusätzlich ein Lösungsmittel umfaßt, in welchem die Komponenten (A), (B) und (C) gelöst oder dispergiert sind, um eine Flüssigkeit zu bilden.

6. Zusammensetzung zur Verhinderung der Polymerkrustenbildung nach Anspruch 5, worin die Gesamtkonzentration der Komponenten (A), (B) und (C) im Bereich von 0,001 bis 15 Gew.% liegt.

7. Zusammensetzung zur Verhinderung der Polymerkrustenbildung nach Anspruch 5 oder 6, worin das Lösungsmittel aus einem organischen Lösungsmittel und gegebenenfalls 0 bis 30 Gew. % Wasser besteht.

8. Zusammensetzung zur Verhinderung der Polymerkrustenbildung nach einem der Ansprüche 5 bis 7, worin das Wasser in einer Menge von 0 bis 10 Gew. % enthalten ist.

9. Zusammensetzung zur Verhinderung der Polymerkrustenbildung nach einem der Ansprüche 5 bis 8, worin der pH der Zusammensetzung über 7 liegt.

10. Zusammensetzung zur Verhinderung der Polymerkrustenbildung nach Anspruch 9, worin der pH 7,5 oder höher ist.

11. Zusammensetzung zur Verhinderung der Polymerkrustenbildung nach Anspruch 10, worin der pH 9,0 oder höher ist.

12. Zusammensetzung zur Verhinderung der Polymerkrustenbildung nach einem der Ansprüche 9 bis 11, worin eine organische Aminverbindung enthalten ist.

13. Polymerisationsreaktor für die Durchführung der Polymerisation eines Monomeren mit einer ethylenischen Doppelbindung, welcher auf seiner Innenwandung eine die Polymerkrustenbildung verhindernde Beschichtung aufweist, welche

B) eine anionische organische Verbindung, die mindestens eine Gruppe, ausgewählt aus der Gruppe, bestehend aus einer Sulfonsäure- und einer Carbonsäuregruppe, enthält und mindestens fünf aufeinanderfolgend konjugierte $\pi$-Bindungen aufweist, und

C) ein Polymer auf Vinylpyrrolidonbasis, und zwar Polyvinylpyrrolidon und/oder ein Copolymer von Vinylpyrrolidon mit mindestens einem anderen Comonomer enthält, dadurch **gekennzeichnet**, daß sie außerdem

A) mindestens eine stickstoffhaltige organische Verbindung, ausgewählt aus der Gruppe, bestehend aus Benzidin, 4-Aminobiphenyl, 2,2'-Diaminodiphenylacetylen, Dispersionsfarbstoff Gelb 9 [d.h. N-(2,4-Dinitrophenyl)-1,4-phenylendiamin], $\alpha$-Naphthylamin, $\beta$-Naphthylamin, 1,8-Diaminonaphthalin, 1,5-Diaminonaphthalin, 1-Aminoanthracen, 1,4-Diaminoanthracen, 9,10-Diaminoanthracen, 1,6-Diaminopyren, 2-Aminoanthrachinon, 1,4-Diaminoanthrachinon, 3,6-Diaminophenanthrenchinon, Chinolin, 4-Aminoacridin, 3,6-Diaminoacridin, Thionin, Indophenol, Methylviologen, 1,10-Phenanthrolin, Phenothiazin, Methylenblau, 2-Aminofluoren, 9-Aminofluoren, Carbazol, Methylcarbazol, 2,3-Diaminophenazin, Acriflavin, Indigo, Safranin (C.I. Nr. 50240), Acridin-Orange (C.I. Nr. 46005), Lösungsmittelfarbstoff Schwarz 5 (C.I. Nr. 50415), Alkaloide, Azobenzol, p-Hydroxyazobenzole, p-Aminoazobenzole, 1,3-Diphenyltriazen, 1-(Phenylazo)-2-naphthalenol, Sudan I (d.h. Lösungsmittelfarbstoff Gelb C.I. 14), Sudan II (d.h. Lösungsmittelfarbstoff Orange C.I. 7), Sudan III (d.h. Lösungsmittelfarbstoff Rot C.I. 23), Sudan IV (Lösungsmittelfarbstoff Rot C.I. 24), Sudan Schwarz B (C.I. Lösungsmittelfarbstoff Schwarz C.I. 3), Sudan O (d.h. Lösungsmittelfarbstoff Rot C.I. 27), Dispersionsfarbstoff Orange 1 (d.h. 4-(4-Nitrophenylazo)diphenylamin), Naphthyl-Rot (d.h. 4-Phenylazo-1-naphthylamin), Chrysoidin (C.I. Nr. 11270), Lösungsmittelfarbstoff Gelb 2 (C.I. Nr. 11020), Lösungsmittelfarbstoff Gelb 6 (C.I. Nr. 11390), Lösungsmittelfarbstoff Orange 1 (C.I. Nr. 11920), Lösungsmittelfarbstoff Orange 2 (C.I. Nr. 12100), Lösungsmittelfarbstoff Orange 14 (C.I. Nr. 20620), Lösungsmittelfarbstoff Rot 1 (C.I. Nr. 12150), Lösungsmittelfarbstoff Rot 3 (C.I. Nr. 12010) und Lösungsmittelfarbstoff Braun 3 (C.I. Nr. 11360), enthält und

worin die Menge der Komponente (B) 0,1 bis 100 Gew.Teile je 100 Gew.Teile der Komponente (A) und die Menge der Komponente (C) 0,1 bis 1000 Gew.Teile je 100 Gew.Teile der Komponenten (A) und (B) zusammengenommen beträgt.

14. Polymerisationsreaktor nach Anspruch 13, worin die Beschichtung zusätzlich auch auf anderen Teilen als der Innenwandung des Polymerisationsreaktors, mit denen das Monomer während der Polymerisation in Berührung kommt, gebildet worden ist.

15. Polymerisationsreaktor nach Anspruch 13 oder 14, worin die Beschichtung auch auf Teilen des Systems zur Rückgewinnung des nicht umgesetzten Monomers, mit denen das nicht umgesetzte Monomer in Berührung kommt, gebildet worden ist.

16. Polymerisationsreaktor nach einem der Ansprüche 13 bis 15, worin die Beschichtung nach der Trocknung ein Gewicht von 0,001 g/m$^2$ oder mehr aufweist.

17. Verfahren zur Herstellung eines Polymeren durch Polymerisation eines Monomeren mit einer ethylenischen Doppelbindung in einem Polymerisationsreaktor, das die Stufe der Durchführung der Polymerisation in einem Polymerisationsreaktor umfaßt, der auf seiner Innenwandung eine die Polymerkrustenbildung verhindernde Beschichtung aufweist, wobei diese Beschichtung

B) eine anionische organische Verbindung, die mindestens eine Gruppe, ausgewählt aus der Gruppe, bestehend aus einer Sulfonsäure- und einer Carbonsäuregruppe, enthält und mindestens fünf aufeinanderfolgend konjugierte $\pi$-Bindungen aufweist, und

C) ein Polymer auf Vinylpyrrolidonbasis, und zwar Polyvinylpyrrolidon und/oder ein Copolymer von Vinylpyrrolidon mit mindestens einem anderen Comonomer enthält, dadurch **gekennzeichnet**, daß sie außerdem

A) mindestens eine stickstoffhaltige organische Verbindung, ausgewählt aus der Gruppe, bestehend aus Benzidin, 4-Aminobiphenyl, 2,2'-Diaminodiphenylacetylen, Dispersionsfarbstoff Gelb 9 [d.h. N-(2,4-Dinitrophenyl)-1,4-phenylendiamin], $\alpha$-Naphthylamin, $\beta$-Naphthylamin, 1,8-Diaminonaphthalin, 1,5-Diaminonaphthalin, 1-Aminoanthracen, 1,4-Diaminoanthracen, 9,10-Diaminoanthracen, 1,6-Diaminopyren, 2-Aminoanthrachinon, 1,4-Diaminoanthrachinon, 3,6-Diaminophenanthrenchinon, Chinolin, 4-Aminoacridin, 3,6-Diaminoacridin, Thionin, Indophenol, Methylviologen, 1,10-Phenanthrolin, Phenothiazin, Methylenblau, 2-Aminofluoren, 9-Aminofluoren, Carbazol, Methylcarbazol, 2,3-Diaminophenazin, Acriflavin, Indigo, Safranin (C.I. Nr. 50240), Acridin-Orange (C.I. Nr. 46005), Lösungsmittelfarbstoff Schwarz 5 (C.I. Nr. 50415), Alkaloide, Azobenzol, p-Hydroxyazobenzole, p-Aminoazobenzole, 1,3-Diphenyltriazen, 1-(Phenylazo)-2-naphthalenol, Sudan I (d.h. Lösungsmittelfarbstoff Gelb C.I. 14), Sudan II (d.h. Lösungsmittelfarbstoff Orange C.I. 7), Sudan III (d.h. Lösungsmittelfarbstoff Rot C.I. 23), Sudan IV (Lösungsmittelfarbstoff Rot C.I. 24), Sudan Schwarz B (Lösungsmittelfarbstoff Schwarz C.I. 3), Sudan O (d.h. Lösungsmittelfarbstoff Rot C.I. 27), Dispersionsfarbstoff Orange 1 (d.h. 4-(4-Nitrophenylazo)diphenylamin), Naphthyl-Rot (d.h. 4-Phenylazo-1-naphthylamin), Chrysoidin (C.I. Nr. 11270), Lösungsmittelfarbstoff Gelb 2 (C.I. Nr. 11020), Lösungsmittelfarbstoff Gelb 6 (C.I. Nr. 11390), Lösungsmittelfarbstoff Orange 1 (C.I. Nr. 11920), Lösungsmittelfarbstoff Orange 2 (C.I. Nr. 12100), Lösungsmittelfarbstoff Orange 14 (C.I. Nr. 20620), Lösungsmittelfarbstoff Rot 1 (C.I. Nr. 12150). Lösungsmittelfarbstoff Rot 3 (C.I. Nr. 12010) und Lösungsmittelfarbstoff Braun 3 (C.I. Nr. 11360), enthält und

worin die Menge der Komponente (B) 0,1 bis 100 Gew.Teile je 100 Gew.Teile der Komponente (A) und die Menge der Komponente (C) 0,1 bis 1000 Gew.Teile je 100 Gew.Teile der Komponenten (A) und (B) zusammengenommen beträgt.

**18.** Verfahren nach Anspruch 17, wobei die Polymerisation als Suspensions-, Emulsions-, Lösungs-, Masse- oder Gasphasenpolymerisation durchgeführt wird.

**19.** Verfahren nach Anspruch 17 oder 18, wobei das Monomer ausgewählt wird aus der Gruppe, bestehend aus Vinylhalogeniden, Vinylestern, Acrylsäure, Methacrylsäure und Estern und Salzen davon, Malein- und Fumarsäure und Estern und Anhydriden davon, Dienmonomeren, aromatischen Vinylverbindungen, Acrylnitril, halogenierten Vinylidenen und Vinylethern.

**Revendications**

**1.** Composition pour empêcher la formation de dépôt de polymères lors de la polymérisation d'un monomère possédant une double liaison éthylénique, comprenant :

B) un composé organique anionique possédant au moins un groupement choisi dans le groupe constitué par le groupement acide sulfonique et le groupement carboxylique, et possédant au moins cinq liaisons $\pi$ conjuguées continues, et

C) un polymère à base de vinylpyrrolidone, à savoir de la polyvinylpyrrolidone et/ou un copolymère de vinylpyrrolidone avec au moins un autre co-monomère, *caractérisée en ce qu*'elle comprend additionnellement

A) au moins un composé organique contenant de l'azote choisi dans le groupe constitué par la benzidine, le 4-aminodiphényle, le 2,2'-diaminodiphénylacétylène, le Jaune dispersé 9 (c'est-à-dire la N-(2,4-dinitrophényl)-1,4-phénylènediamine), l'α-naphtylamine, la β-naphtylamine, le 1,8-diaminonaphtalène, le 1,5-diaminonaphtalène, le 1-aminoanthracène, le 1,4-diaminoanthracène, le 9,10-diaminoanthracène, le 1,6 diaminopyrène, la 2-aminoanthraquinone, la 1,4-diaminoanthraquinone, la 3,6-diaminophénanthrènequinone, la quinoline, la 4-aminoacridine, la 3,6-diaminoacridine, la thionine, l'indophénol, le méthylviologène, la 1,10-phénanthroline, la phénothiazine, le bleu de méthylène, le 2-aminofluorène, le 9-aminofluorène, le carbazole, le méthylcarbazole, la 2,3-diaminophénazine, l'acriflavine, l'indigo, la safranine (C. I. n° 50240), l'orange d'acridine (C. I. n° 46005), le Noir à solvant 5 (C. I. n° 50415), les alcaloïdes, l'azobenzène, les p-hydroxyazobenzènes, les p-aminoazobenzènes, le 1,3-diphényltriazène, le 1-(phénylazo)-2-naphtalénol, le soudan I (c'est-à-dire le C. I. Jaune à solvant 14), le soudan II (c'est-à-dire le C. I. Orange à solvant 7), le soudan III (c'est-à-dire le C. I. Rouge à solvant 23), le soudan IV (C. I. rouge à solvant 24), le Noir soudan B (C. I. Noir à solvant 3), le Rouge soudan O (c'est-à-dire le C. I. Rouge à solvant 27), l'Orange dispersé 1 (c'est-à-dire la 4-(4-nitrophénylazo)diphénylamine), le Rouge naphtyle (c'est-à-dire la 4-phénylazo-1-naphtylamine), la chrysoïdine (C. I. n° 11270), le Jaune à solvant 2 (C. I. n° 11020), le Jaune à solvant 6 (C. I. n° 11390), l'Orange à solvant 1 (C. I. n° 11920), l'Orange à solvant 2 (C. I. n° 12100), l'Orange à solvant 14 (C. I. n° 20620), le Rouge à solvant 1 (C. I. n° 12150), le Rouge à solvant 3(C. I. n° 12010), le Brun à solvant 3 (C. I. n° 11360) et

dans laquelle la proportion du constituant (B) est de 0,1 à 1000 parties en poids pour 100 parties en poids du constituant (A), et la proportion du constituant (C) est de 0,1 à 1 000 parties en poids pour 100 parties en poids du total des constituants (A) et (B).

**2.** Composition pour empêcher la formation de dépôt de polymères selon la Revendication 1, dans laquelle ledit constituant (A) comprend au moins un élément choisi dans le groupe constitué par l'α-

naphtylamine, la $\beta$-naphtylamine, le 1,8-diaminonaphtalène, le 1,5-diaminonaphtalène, la quinoline, la 4-aminoacridine, la 3,6-diaminoacridine, la thionine, l'indophénol, le méthylviologène, la 1,10-phénanthroline, la phénothiazine, le bleu de méthylène, le 2-aminofluorène, le 9-aminofluorène, le carbazole, le méthylcarbazole, la 2,3-diaminophénazine, l'acriflavine, l'indigo, la safranine (C. I. n° 50240), l'orange d'acridine (C. I. n° 46005), le Noir à solvant 5 (C. I. n° 50415), l'azobenzène, les p-hydroxyazobenzènes, les p-aminoazobenzènes, le 1,3-diphényltriazéne, le 1-(phénylazo)-2-naphtalénol, le soudan I (c'est-à-dire le C. I. Jaune à solvant 14), le soudan II (c'est-à-dire le C. I. Orange à solvant 7), le soudan III (c'est-à-dire le C. I. Rouge à solvant 23), le soudan IV (C. I. rouge à solvant 24), le Noir soudan B (C. I. Noir à solvant 3), le Rouge soudan O (c'est-à-dire le C. I. Rouge à solvant 27), l'Orange dispersé 1 (c'est-à-dire la 4-(4-nitrophénylazo)diphénylamine), le Rouge naphtyle (c'est-à-dire la 4-phénylazo-1-naphtylamine), la chrysoïdine (C. I. n° 11270), le Jaune à solvant 2 (C. I. n° 11020), le Jaune à solvant 6 (C. I. n° 11390), l'Orange à solvant 1 (C. I. n° 11920), l'Orange à solvant 2 (C. I. n° 12100), l'Orange à solvant 14 (C. I. n° 20620), le Rouge à solvant 1 (C. I. n° 12150), le Rouge à solvant 3 (C. I. n° 12010), le Brun à solvant 3 (C. I. n° 11360).

3. Composition pour empêcher la formation de dépôt de polymères selon la Revendication 1 ou 2, dans laquelle ledit constituant (B) comprend au moins un élément choisi dans le groupe constitué par les composés hétérocycliques anioniques et les azoïques anioniques.

4. Composition pour empêcher la formation de dépôt de polymères selon l'une quelconque des Revendications 1 à 3, dans lequel ledit constituant (C) comprend au moins un élément choisi dans le groupe constitué par les polyvinylpyrrolidones, les copolymères vinylpyrrolidone/acide acrylique et les copolymères vinylpyrrolidone/acétate de vinyle d'un poids moléculaire compris entre 2 000 et 2 000 000.

5. Composition pour empêcher la formation de dépôt de polymères selon l'une quelconque des Revendications 1 à 4, qui comprend additionnellement un solvant dans lequel sont dissous ou dispersés les constituants (A), (B) et (C) pour prendre l'état liquide.

6. Composition pour empêcher la formation de dépôt de polymères selon la Revendication 5, dans laquelle la concentration totale des constituants (A), (B) et (C) est comprise entre 0,001 et 15 % en poids.

7. Composition pour empêcher la formation de dépôt de polymères selon la Revendication 5 ou 6, dans laquelle le solvant est constitué d'un solvant organique additionné optionnellement de 0 à 30 % en poids d'eau.

8. Composition pour empêcher la formation de dépôt de polymères selon l'une quelconque des Revendications 5 à 7, dans laquelle l'eau est contenue à raison de 0 à 10 % en poids.

9. Composition pour empêcher la formation de dépôt de polymères selon l'une quelconque des Revendications 5 à 8, dans laquelle le pH de la composition pour empêcher la formation de dépôt de polymères est supérieur à 7.

10. Composition pour empêcher la formation de dépôt de polymères selon la Revendication 9, dans laquelle le pH est égale ou supérieur à 7,5.

11. Composition pour empêcher la formation de dépôt de polymères selon la Revendication 10, dans laquelle le pH est égal ou supérieur à 9.

12. Composition pour empêcher la formation de dépôt de polymères selon l'une quelconque des Revendications 9 à 11, dans laquelle est contenu un composé organique aminé.

13. Cuve de polymérisation destinée à être utilisée lors de la polymérisation d'un monomère possédant une double liaison éthylénique, munie sur les surfaces de sa paroi interne d'un revêtement pour empêcher la formation de dépôt de polymères, ledit revêtement comprenant :

B) un composé organique anionique possédant au moins un groupement choisi dans le groupe constitué par le groupement acide sulfonique et le groupement carboxylique, et possédant au moins cinq liaisons $\pi$ conjuguées continues, et

C) un polymère à base de vinylpyrrolidone, à savoir de la polyvinylpyrrolidone et/ou un copolymère de vinylpyrrolidone avec au moins un autre co-monomère, **caractérisée en ce qu'**elle comprend additionnellement

A) au moins un composé organique contenant de l'azote choisi dans le groupe constitué par la benzidine, le 4-aminodiphényle, le 2,2'-diaminodiphénylacétylène, le Jaune dispersé 9 (c'est-à-dire la N-(2,4-dinitrophényl)-1,4-phénylènediamine), l'α-naphtylamine, la β-naphtylamine, le 1,8-diaminonaphtalène, le 1,5-diaminonaphtalène, le 1-aminoanthracène, le 1,4-diaminoanthracène, le 9,10-diaminoanthracène, le 1,6 diaminopyrène, la 2-aminoanthraquinone, la 1,4-diaminoanthraquinone, la 3,6-diaminophénanthrènequinone, la quinoline, la 4-aminoacridine, la 3,6-diaminoacridine, la thionine, l'indophénol, le méthylviologène, la 1,10-phénanthroline, la phénothiazine, le bleu de méthylène, le 2-aminofluorène, le 9-aminofluorène, le carbazole, le méthylcarbazole, la 2,3-diaminophénazine, l'acriflavine, l'indigo, la safranine (C. I. n° 50240), l'orange d'acridine (C. I. n° 46005), le Noir à solvant 5 (C. I. n° 50415), les alcaloïdes, l'azobenzène, les p-hydroxyazobenzènes, les p-aminoazobenzènes, le 1,3-diphényltriazène, le 1-(phénylazo)-2-naphtalénol, le soudan I (c'est-à-dire le C. I. Jaune à solvant 14), le soudan II (c'est-à-dire le C. I. Orange à solvant 7), le soudan III (c'est-à-dire le C. I. Rouge à solvant 23), le soudan IV (C. I. rouge à solvant 24), le Noir soudan B (C. I. Noir à solvant 3), le Rouge soudan O (c'est-à-dire le C. I. Rouge à solvant 27), l'Orange dispersé 1 (c'est-à-dire la 4-(4-nitrophénylazo)diphénylamine), le Rouge naphtyle (c'est-à-dire la 4-phénylazo-1-naphtylamine), la chrysoïdine (C. I. n° 11270), le Jaune à solvant 2 (C. I. n° 11020), le Jaune à solvant 6 (C. I. n° 11390), l'Orange à solvant 1 (C. I. n° 11920), l'Orange à solvant 2 (C. I. n° 12100), l'Orange à solvant 14 (C. I. n° 20620), le Rouge à solvant 1 (C. I. n° 12150), le Rouge à solvant 3 (C. I. n° 12010), le Brun à solvant 3 (C. I. n° 11360) et

dans laquelle la proportion du constituant (B) est de 0,1 à 1 000 parties en poids pour 100 parties en poids du constituant (A), et la proportion du constituant (C) est de 0,1 à 1 000 parties en poids pour 100 parties en poids du total des constituants (A) et (B).

14. Cuve de polymérisation selon la Revendication 13, dans laquelle ledit revêtement a additionnellement été déposé sur les parties de la cuve de polymérisation avec lesquelles le monomère est en contact pendant la polymérisation autres que la surface de sa paroi interne.

15. Cuve de polymérisation selon la Revendication 13 ou 14, dans laquelle ledit revêtement a additionnellement été déposé sur les parties d'un système de récupération du monomère n'ayant pas réagi avec lesquelles entre en contact le monomère n'ayant pas réagi.

16. Cuve de polymérisation selon l'une quelconque des Revendications 13 à 15, dans laquelle, après séchage, ledit revêtement possède un poids de revêtement de 0,001 g/m$^2$ ou plus.

17. Procédé de production d'un polymère par polymérisation, dans une cuve de polymérisation, d'un monomère possédant une double liaison éthylénique, comprenant l'étape d'exécution de ladite polymérisation dans une cuve de polymérisation dont les surfaces de la paroi interne ont été revêtues d'un revêtement empêchant la formation d'un dépôt de polymères, dans lequel le revêtement comprend :

B) un composé organique anionique possédant au moins un groupement choisi dans le groupe constitué par le groupement acide sulfonique et le groupement carboxylique, et possédant au moins cinq liaisons π conjuguées continues, et

C) un polymère à base de vinylpyrrolidone, à savoir de la polyvinylpyrrolidone et/ou un copolymère de vinylpyrolidone avec au moins un autre co-monomère, **caractérisée en ce qu'**elle comprend additionnellement

A) au moins un composé organique contenant de l'azote choisi dans le groupe constitué par la benzidine, le 4-aminodiphényle, le 2,2'-diaminodiphénylacétylène, le Jaune dispersé 9 (c'est-à-dire la N-(2,4-dinitrophényl) 1,4-phénylènediamine), l'α-naphtylamine, la β-naphtylamine, le 1,8-diaminonaphtalène, le 1,5-diaminonaphtalène, le 1-aminoanthracène, le 1,4-diaminoanthracène, le 9,10-diaminoanthracène, le 1,6 diaminopyrène, la 2-aminoanthraquinone, la 1,4-diaminoanthraquinone, la 3,6-diaminophénanthrènequinone, la quinoline, la 4-aminoacridine, la 3,6-diaminoacridine, la thionine, l'indophénol, le méthylviologène, la 1,10-phénanthroline, la phénothiazine, le bleu de méthylène, le 2-aminofluorène, le 9-aminofluorène, le carbazole, le méthylcarbazole, la 2,3-diaminophénazine, l'acriflavine, l'indigo, la safranine (C. I. n° 50240), l'orange d'acridine (C. I. n° 46005), le Noir à solvant 5 (C. I. n° 50415), les alcaloïdes, l'azobenzène, les p-hydroxyazobenzènes, les p-aminoazobenzènes, le 1,3-diphényltriazène, le 1-(phénylazo)-2-naphtalénol, le soudan I (c'est-à-dire le C. I.

21

Jaune à solvant 14), le soudan II (c'est-à-dire le C. I. Orange à solvant 7), le soudan III (c'est-à-dire le C. I. Rouge à solvant 23), le soudan IV (C. I. rouge à solvant 24), le Noir soudan B (C. I. Noir à solvant 3), le Rouge soudan O (c'est-à-dire le C. I. Rouge à solvant 27), l'Orange dispersé 1 (c'est-à-dire la 4-(4-nitrophénylazo)diphénylamine), le Rouge naphtyle (c'est-à-dire la 4-phénylazo-1-naphtylamine),la chrysoïdine (C. I. n° 11270), le Jaune à solvant 2 (C. I. n° 11020), le Jaune à solvant 6 (C. I. n° 11390), l'Orange à solvant 1 (C. I. n° 11920), l'Orange à solvant 2 (C. I. n° 12100), l'Orange à solvant 14 (C. I. n° 20620), le Rouge à solvant 1 (C. I. n° 12150), le Rouge à solvant 3 (C. I. n° 12010), le Brun à solvant 3 (C. I. n° 11360) et

dans laquelle la proportion du constituant (B) est de 0, 1 à 1 000 parties en poids pour 100 parties en poids du constituant (A), et la proportion du constituant (C) est de 0,1 à 1 000 parties en poids pour 100 parties en poids du total des constituants (A) et (B).

18. Procédé selon la Revendication 17, dans lequel ladite polymérisation est effectuée sous forme de polymérisation en suspension, de polymérisation en émulsion, de polymérisation en solution, de polymérisation en masse ou de polymérisation en phase gazeuse.

19. Procédé selon la Revendication 17 ou 18, dans lequel ledit monomère est choisi dans le groupe constitué des halogénures de vinyle ; des esters vinyliques ; de l'acide acrylique et de l'acide méthacrylique, et des esters et sels de ceux-ci ; de l'acide maléique et de l'acide fumarique, et des esters et anhydrides de ceux-ci ; des monomères diéniques ; des composés vinyliques aromatiques ; de l'acrylonitrile ; des vinylidènes halogénés ; et des éthers vinyliques.